(19) Europäisches Patentamt
European Patent Office
Office européen des brevets

(11) **EP 3 929 635 B1**

(12) **EUROPEAN PATENT SPECIFICATION**

(45) Date of publication and mention of the grant of the patent:
**28.08.2024 Bulletin 2024/35**

(21) Application number: **20738925.5**

(22) Date of filing: **09.01.2020**

(51) International Patent Classification (IPC):
***G02B 5/30*** $^{(2006.01)}$ ***C08L 101/08*** $^{(2006.01)}$
***C08J 5/18*** $^{(2006.01)}$ ***G02B 1/10*** $^{(2015.01)}$
***C09K 19/00*** $^{(2006.01)}$

(52) Cooperative Patent Classification (CPC):
**C09D 201/00; G02B 5/3016;** C09K 2019/0448; G02B 1/14; G02B 7/008

(86) International application number:
**PCT/KR2020/000367**

(87) International publication number:
**WO 2020/145672 (16.07.2020 Gazette 2020/29)**

# (54) METHOD FOR MANUFACTURING OPTICALLY ANISOTROPIC FILM

VERFAHREN ZUR HERSTELLUNG EINES OPTISCH ANISOTROPEN FILMS

PROCÉDÉ DE FABRICATION D'UN FILM OPTIQUEMENT ANISOTROPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2019 KR 20190002639**

(43) Date of publication of application:
**29.12.2021 Bulletin 2021/52**

(73) Proprietor: **LG Chem, Ltd.**
**Seoul 07336 (KR)**

(72) Inventors:
- **YOON, Hyuk**
  **Daejeon 34122 (KR)**
- **RYU, Seong Ho**
  **Daejeon 34122 (KR)**
- **PARK, Moon Soo**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**WO-A1-2018/021078**
**KR-A- 20080 098 928**
**KR-A- 20130 017 074**
**KR-A- 20130 017 074**
**KR-A- 20150 106 457**
**KR-A- 20170 054 444**
**US-A1- 2017 327 745**
**US-A1- 2018 348 417**
**US-A1- 2021 103 083**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

# Description

## Technical Field

The present application relates to a method for producing an optically anisotropic film.
The present application claims the benefit of priority based on Korean Patent Application No. 10-2019-0002639 filed on January 9, 2019.

## Background

Optically anisotropic films can be used for various applications.
The optically anisotropic film may be disposed on one side or both sides of a liquid crystal cell, for example, to improve viewing angle characteristics of an LCD (liquid crystal display). The optically anisotropic film is also used for preventing reflection and securing visibility, and the like in a reflective LCD or an OLED (organic light emitting device) and the like (Patent Document 1: JP-A-1996-321381).
As the optically anisotropic film, a polymer stretched film or a liquid crystal film can be used. The optically anisotropic film can be provided to have a reverse wavelength dispersion property so that it can exhibit desired phase retardation characteristics in a wide wavelength range.
The optically anisotropic film is also required for environmental reliability such as heat resistance and light resistance, in addition to optical properties, but when the optically anisotropic film is produced from a liquid crystal material having a reverse wavelength dispersion property, there is a limitation that high temperature reliability, such as decrease of phase retardation at high temperatures, is not secured.
US2018348417A1 describes an optical film having an overcoat layer on an optically anisotropic layer obtained by polymerizing a liquid crystal composition.

## Disclosure

## Technical Problem

The present application provides a method for producing an optically anisotropic film having reverse wavelength dispersion characteristics and excellent high temperature reliability.

## Technical Solution

The present application relates to a method for producing an optically anisotropic film. The production method comprises a step of forming an overcoat layer comprising a photoreactive compound having three or more photoreactive groups on one side of an optically anisotropic layer comprising a polymerizable liquid crystal compound having a reverse wavelength dispersion property. Figure 1 is an illustration of an exemplary optically anisotropic film. As illustrated in Figure 1, the optically anisotropic film comprises an optically anisotropic layer (10) and an overcoat layer (20).
The optically anisotropic layer has a reverse wavelength dispersion property. Through this, it is possible to exhibit the desired phase retardation characteristics in a wide wavelength range. In this specification, the reverse wavelength dispersion property means a characteristic that satisfies Equation 1 below:

[Equation 1]

$$R(450)/R(550) < R(650)/R(550).$$

In Equation 1, R ($\lambda$) means an in-plane retardation of an optically anisotropic layer for light having a wavelength of $\lambda$ nm. In Equation 1, R (450) is an in-plane retardation for light having a wavelength of 450 nm, R (550) is an in-plane retardation for light having a wavelength of 550 nm, and R (650) is an in-plane retardation for light having a wavelength of 650 nm.
In this specification, the in-plane retardation (Rin) is defined by Equation 2 below:

[Equation 2]

$$Rin = d \times (nx - ny).$$

In Equation 2, nx and ny mean refractive indexes in the x-axis and y-axis directions of a cured layer, a liquid crystal layer, an optically anisotropic layer or an optically anisotropic film (100), respectively, as illustrated in Figure 2. The x-axis may mean an axis parallel to the direction in which the plane direction refractive index of the cured layer, the liquid crystal layer, the optically anisotropic layer or the optically anisotropic film is maximized, and the y-axis may mean an axis parallel to the direction that is in-plane perpendicular to the x-axis direction. The x-axis may be referred to as a slow axis of the cured layer, the liquid crystal layer, the optically anisotropic layer or the optically anisotropic film, and the y-axis may be referred to as a fast axis of the cured layer, the liquid crystal layer, the optically anisotropic layer or the film. In Figure 2, the z-axis is an axis parallel to the thickness direction of the cured layer, the liquid crystal layer, the optically anisotropic layer or the film. Such definitions may apply equally herein, unless otherwise specified.

When the liquid crystal compound comprised in the optically anisotropic layer has a rod shape, the x-axis direction may mean the long axis direction of the rod shape, the y-axis direction may mean the short axis direction of the rod shape and the z-axis direction may mean the direction of the normal of the plane formed by the x-axis and the y-axis. When the liquid crystal compound has a disk shape, the x-axis direction may mean the disk normal direction of the disk shape, the y-axis direction may mean the diameter direction of the disk shape and the z-axis direction may mean the direction of the normal of the plane formed by the x-axis and the y-axis.

To calculate the in-plane retardation for light with a wavelength of 450 nm, the refractive indexes for light with a wavelength of 450 nm in the x-axis and y-axis directions are applied as nx and ny, respectively, in Equation 2; to calculate the in-plane retardation for light with a wavelength of 550 nm, the refractive indexes for light with a wavelength of 550 nm in the x-axis and y-axis directions are applied as nx and ny, respectively, in Equation 2; and to calculate the in-plane retardation for light with a wavelength of 650 nm, the refractive indices for light with a wavelength of 650 nm in the x-axis and y-axis directions are applied as nx and ny, respectively, in Equation 2.

The optically anisotropic layer may comprise a liquid crystal compound. In this specification, the "optically anisotropic layer" may mean a layer containing the liquid crystal compound, and the "optically anisotropic film" may mean a laminate further comprising other layers in addition to the optically anisotropic layer. The other layers may be exemplified by an overcoat layer, a base layer to be described below, an alignment film, and the like.

The liquid crystal compound may be a polymerizable liquid crystal compound. In this specification, the term "polymerizable liquid crystal compound" may mean a compound containing a site capable of exhibiting liquid crystallinity, for example, a mesogen skeleton or the like, and also containing one or more polymerizable functional groups. Such polymerizable liquid crystal compounds are variously known under the name of RM (reactive mesogen).

The optically anisotropic layer may comprise the liquid crystal compound in a polymerized state or a cured state. The polymerized state or the cured state of the liquid crystal compound may mean a state where a skeleton such as a main chain or a side chain of a liquid crystal polymer is formed.

The optically anisotropic layer comprises the liquid crystal compound in a planar-oriented state. In the present application, the planar orientation may mean a case where the optical axis of the optically anisotropic layer containing the liquid crystal compound has a tilt angle of about 0 degrees to about 25 degrees, about 0 degrees to about 15 degrees, about 0 degrees to about 10 degrees, about 0 degrees to about 5 degrees or about 0 degrees with respect to the plane of the optically anisotropic layer. In the present application, the optical axis may mean, for example, a fast axis or a slow axis when incident light transmits through the relevant region.

The polymerizable liquid crystal compound may be a monofunctional or multifunctional polymerizable liquid crystal compound. Here, the monofunctional polymerizable liquid crystal compound may be a compound having one polymerizable functional group and the multifunctional polymerizable liquid crystal compound may mean a compound containing two or more polymerizable functional groups. In one example, the multifunctional polymerizable liquid crystal compound may comprise 2 to 10, 2 to 8, 2 to 6, 2 to 5, 2 to 4, 2 to 3, or 2 or 3 polymerizable functional groups. The optically anisotropic layer may comprise polymerizable liquid crystal compounds having the same polymerizable functional group or two or more polymerizable liquid crystal compounds having different polymerizable functional groups.

The polymerizable functional group may be, for example, an alkenyl group, an epoxy group, a carboxyl group, an acryloyl group, a methacryloyl group, an acryloyloxy group or a methacryloyloxy group, but is not limited thereto.

The optically anisotropic layer may comprise a polymerizable liquid crystal compound having a reverse wavelength dispersion property. The reverse wavelength dispersion property may mean a characteristic satisfying the characteristic of Equation 1 below. By using the liquid crystal compound having a reverse wavelength dispersion property, the optically anisotropic layer has a reverse wavelength dispersion property.

[Equation 1]

$$R(450)/R(550) < R(650)/R(550).$$

In Equation 1, R ($\lambda$) means an in-plane retardation of the liquid crystal layer or the optically anisotropic layer, which comprises the polymerizable liquid crystal compound in a planar- oriented state, for light having a wavelength of

λ nm.

In this specification, the liquid crystal compound having a reverse wavelength dispersion property means a liquid crystal compound in which the liquid crystal layer formed by curing the liquid crystal compound alone shows a reverse wavelength dispersion property. In this specification, unless otherwise specified in describing the wavelength dispersion property and the retardation value, they may mean a wavelength dispersion property and a retardation value of the liquid crystal layer comprising the liquid crystal compound in a planar- oriented state. The planar orientation may mean uniaxial orientation on the xy plane. The liquid crystal compound may be comprised in a cured state in the liquid crystal layer.

The reverse wavelength dispersible liquid crystal compound may have a low degree of curing because the size of molecules is larger than that of other wavelength dispersible liquid crystal compounds. The reverse wavelength dispersible liquid crystal compound is not sufficiently cured even under the same curing conditions as compared with other wavelength dispersible liquid crystal compounds, so that the durability can be weak and the retardation value can be decreased at high temperature. The present application can improve high temperature reliability by forming an overcoat layer on an optically anisotropic layer, followed by aging treatment, to produce an optically anisotropic film.

The value of R (450)/R (550) in the liquid crystal compound or the optically anisotropic layer may be 0.99 or less. In one example, the R (450)/R (550) may be in a range of 0.6 to 0.99. In another example, R (450)/R (550) may be 0.61 or more, 0.62 or more, 0.63 or more, 0.64 or more, 0.65 or more, 0.66 or more, 0.67 or more, 0.69 or more, 0.70 or more, 0.71 or more, 0.72 or more, 0.73 or more, 0.74 or more, 0.75 or more, 0.76 or more, 0.77 or more, 0.78 or more, 0.79 or more, 0.80 or more, 0.81 or more, 0.82 or more, 0.83 or more, or 0.84 or more. In another example, the R (450)/R (550) may be 0.98 or less, 0.97 or less, 0.96 or less, 0.95 or less, 0.94 or less, 0.93 or less, 0.92 or less, 0.91 or less, 0.90 or less, 0.89 or less, 0.88 or less, 0.87 or less, 0.86 or less, or 0.85 or less.

The value of R (650)/R (450) in the liquid crystal compound or the optically anisotropic layer may be 1.01 or more. In one example, R (650)/R (550) may be in a range of 1.00 to 1.19. The R (650)/R (550) may be 1.18 or less, 1.17 or less, 1.16 or less, 1.15 or less, 1.14 or less, 1.13 or less, 1.12 or less, or 1.11 or less. In another example, R (650)/R (550) in Equation 1 may be 1.01 or more, 1.02 or more, 1.03 or more, 1.04 or more, 1.05 or more, 1.06 or more, 1.07 or more, 1.08 or more, or 1.09 or more.

The liquid crystal compound satisfying the range of R (450)/R (550) and/or R (650)/R (550) is not particularly limited. Liquid crystal compounds having R (450)/R (550) and/or R (650)/R (550) in the above range are known as liquid crystal compounds having reverse wavelength dispersion properties in this field, and such a liquid crystal compound can be selected and used.

The birefringence of the liquid crystal compound is known to be mainly determined by a molecular conjugation structure, differential oscillator strength and an order parameter, where in order for the liquid crystal compound to exhibit high birefringence, a large electron density is required in the direction of the main axis and thus, most of the liquid crystal compounds have a highly conjugated shape in the long axis direction.

In order for the liquid crystal compound to exhibit the reverse wavelength dispersion property, it is necessary to tune the birefringence between the long axis and the axis perpendicular to the long axis, and accordingly, most of the liquid crystal compounds designed to have the reverse wavelength dispersion property may have a shape that the main axis (long axis) has a large retardation and a small dispersion value and the axis perpendicular to the main axis has a small retardation and a large dispersion value, while having T or H type molecular shapes.

For example, among the liquid crystal compounds disclosed in PCT-JP2015-083728, PCT-JP2015-085342, PCT-JP2016-050322, PCT-JP2016-050660, PCT-JP2016-050661, PCT-JP2016-050984 and PCT-JP2016-050663, some liquid crystal compounds are liquid crystal compounds having a reverse wavelength dispersion property, and in the present application, such liquid crystal compounds can be applied, but the type of the applicable liquid crystal compound in the present application is not limited thereto, and various types of polymerizable liquid crystal compounds can be used as far as they have the dispersion property.

The liquid crystal compound may have refractive index anisotropy (Δn) of 0.03 to 0.13 for light having a wavelength of 550 nm. In this specification, the refractive index anisotropy may mean a difference (ne-no) between an extraordinary refractive index (ne) and an ordinary refractive index (no) of a liquid crystal compound. The extraordinary refractive index may mean a refractive index for the slow axis direction of the liquid crystal compound, and the ordinary refractive index may mean a refractive index for the fast axis direction of the liquid crystal compound. The refractive index may mean a refractive index for light having a wavelength of 550 nm.

The in-plane retardation value of the optically anisotropic layer can be appropriately controlled according to the use of the optically anisotropic film. The in-plane retardation value of the optically anisotropic layer for light having a wavelength of 550nm may be, for example, 90 nm to 300 nm. When the optically anisotropic layer is to be used as a half wave plate, the in-plane retardation value for light having a wavelength of 550 nm may be, for example, in a range of 240 nm to 300 nm. When the optically anisotropic layer is to be used as a quarter wave plate, the in-plane retardation value for light having a wavelength of 550 nm may be, for example, in a range of 100 nm to 180 nm. As the in-plane retardation value of the optically anisotropic layer, the desired value can be obtained by controlling the refractive index

anisotropy of the liquid crystal compound, the thickness of the optically anisotropic layer, and the like.

The overcoat layer (20) may be directly formed on one side of the optically anisotropic layer (10). In this specification, the fact that B is formed or disposed directly on one side of A may mean a structure in which A and B directly contact each other without another intermediate layer between A and B. The optically anisotropic film may have improved high temperature reliability through this structure.

The overcoat layer comprises a photoreactive compound. In this specification, the photoreactive compound means a compound having at least one photoreactive group. The overcoat layer may comprise a photoreactive compound in a cured state. The overcoat layer comprises a compound having three or more photoreactive groups as the photoreactive compound. Through this, it may be advantageous to improve the high temperature durability of the optically anisotropic film.

In this specification, the photoreactive group may mean a functional group capable of performing a photocrosslinking reaction or a photopolymerization reaction by irradiation of light. The photoreactive compound may include a compound having cinnamate groups or (meth)acryl groups as the photoreactive groups. The overcoat layer may comprise a photoreactive compound in a photocrosslinked or photopolymerized state.

In one example, the photoreactive compound may include a monomer having a (meth)acryl group. The photoreactive compound may be a monomer having three or more (meth)acryl groups. As such a photoreactive compound, a multifunctional acrylate may be exemplified. In this specification, the multifunctional acrylate may mean a compound containing at least two or more, or three or more (meth)acryl groups, and containing 10 or less, 8 or less, or 6 or less (meth)acryl groups.

In one example, the multifunctional acrylate may comprise three, four, five or six (meth)acryl groups. Such a multifunctional acrylate may be exemplified by, for example, pentaerythritol triacrylate, dipentaerythritol hexaacrylate, tris[2-(acryloyloxy)ethyl] isocyanurate or urethane acrylate, and the like, but is not limited thereto.

In one example, the photoreactive compound may be a photo-alignment polymer. The photo-alignment polymer may be exemplified by a polymer having cinnamate groups. The photoreactive compound may be a polymer having three or more cinnamate groups. The photoreactive compound may be exemplified by, specifically, polynorbornene cinnamate, polynorbornene alkoxy cinnamate, polynorbornene allyloyloxy cinnamate, polynorbornene fluorinated cinnamate, polynorbornene chlorinated cinnamate or polynorbornene dicinnamate, and the like.

The polymer having the cinnamate group may have a weight average molecular weight, for example, in a range of 10,000 to 100,000. The weight average molecular weight may mean a weight average molecular weight (Mw) value measured using a standard polystyrene (PS) resin.

When the photoreactive compound is a photo-alignment polymer, the overcoat layer may further comprise a multifunctional acrylate. An example of the multifunctional acrylate is as described above. The multifunctional acrylate may be included in a range of 5 to 20 parts by weight relative to 100 parts by weight of the photo-orientational polymer.

According to a first exemplary embodiment of the present application, the overcoat layer may comprise only a multifunctional acrylate as the photoreactive compound. The multifunctional acrylate may have 3 or more, specifically, 3 to 10, 3 to 8, 3 to 6 (meth)acryl groups. The multifunctional acrylate may contain a hydroxy group at the terminal. The multifunctional acrylate may be a compound of Formula 1 below:

[Formula 1]

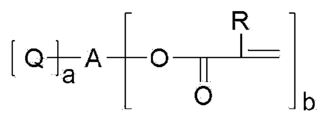

In Formula 1, Q is a hydroxyl group, R is hydrogen or an alkyl group, a is an integer of 1 or more, b is an integer of 3 or more, and A is an a + b-valent organic group. The alkyl group may be an alkyl group having 1 to 4 carbon atoms, 1 to 3 carbon atoms, 1 to 2 carbon atoms or 1 carbon atom.

In this specification, the n-valent organic group may mean an organic group having n binding sites. In Formula 1, the organic group may be, for example, a hydrocarbon group. The hydrocarbon group may be, for example, a saturated hydrocarbon group or an unsaturated hydrocarbon group. In one example, A may be a hydrocarbon group having 1 to 16 carbon atoms, 1 to 12 carbon atoms, 1 to 8 carbon atoms, 1 to 4 carbon atoms or 4 to 8 carbon atoms. A may be a linear, branched or cyclic hydrocarbon group.

In Formula 1, a may be an integer of 1 to 3, and according to one example of the present application, a may be 1. In Formula 1, b may be an integer of 3 to 10, an integer of 3 to 8, an integer of 3 to 6, or an integer of 3 to 4, and according to one example of the present application, b may be 3.

According to a second exemplary embodiment of the present application, the overcoat layer may comprise a

photo-alignment polymer and a multifunctional acrylate as the photoreactive compound. In the case of the second exemplary embodiment, it may be advantageous to form an optically anisotropic film having a multilayer structure by further coating a liquid crystal composition, if necessary, using the overcoat layer as a liquid crystal alignment film. The photo-alignment polymer may be a polymer having 3 or more cinnamate groups. As the multifunctional acrylate of the second exemplary embodiment, the multifunctional acrylate of the first exemplary embodiment may be used.

The photo-alignment polymer may be a compound containing a repeating unit of Formula 2 below:

[Formula 2]

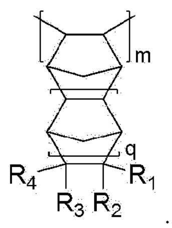

In Formula 2, m is an integer in a range of 50 to 5000, q is an integer of 0 to 4, at least one of $R_1$, $R_2$, $R_3$, and $R_4$ is a radical of Formula 2a below, and $R_1$, $R_2$, $R_3$, and $R_4$, which are other than the radical of Formula 2a below, are each independently selected from the group consisting of hydrogen; halogen; linear or branched alkyl having 1 to 20 carbon atoms which is substituted or unsubstituted; linear or branched alkenyl having 2 to 20 carbon atoms which is substituted or unsubstituted; linear or branched alkynyl having 2 to 20 carbon atoms which is substituted or unsubstituted; substituted or unsubstituted cycloalkyl having 3 to 12 carbon atoms; substituted or unsubstituted aryl having 6 to 40 carbon atoms; and a polar functional group containing at least one or more selected from oxygen, nitrogen, phosphorus, sulfur, silicon and boron:

[Formula 2a]

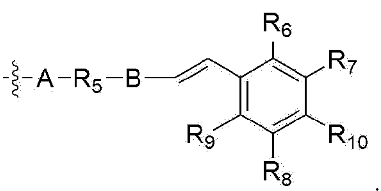

In Formula 2a, A is a single bond, oxygen, sulfur or -NH-, B is selected from the group consisting of a single bond, substituted or unsubstituted alkylene having 1 to 20 carbon atoms, carbonyl, carboxy, ester, substituted or unsubstituted arylene having 6 to 40 carbon atoms, and substituted or unsubstituted heteroarylene having 6 to 40 carbon atoms, $R_5$ is selected from the group consisting of a single bond, substituted or unsubstituted alkylene having 1 to 20 carbon atoms, substituted or unsubstituted alkenylene having 2 to 20 carbon atoms, substituted or unsubstituted cycloalkylene having 3 to 12 carbon atoms, substituted or unsubstituted arylene having 6 to 40 carbon atoms, substituted or unsubstituted aralkylene having 7 to 15 carbon atoms, and substituted or unsubstituted alkynylene having 2 to 20 carbon atoms, and at least one of $R_6$ to $R_9$ is a radical represented by -L-$R_{10}$-$R_{11}$-(substituted or unsubstituted aryl having 6 to 40 carbon atoms), the remaining $R_6$ to $R_9$ except for this are the same or different from each other, and are each independently selected from the group consisting of hydrogen, halogen, substituted or unsubstituted alkyl group having 1 to 20 carbon atoms; substituted or unsubstituted alkoxy having 1 to 20 carbon atoms; substituted or unsubstituted aryloxy having 6 to 30 carbon atoms; substituted or unsubstituted aryl having 6 to 40 carbon atoms and heteroaryl having 6 to 40 carbon atoms containing Group 14, 15 or 16 hetero elements, L is selected from the group consisting of oxygen, sulfur, -NH-, substituted or unsubstituted alkylene having 1 to 20 carbon atoms, carbonyl, carboxy, -CONH- and substituted or unsubstituted arylene having 6 to 40 carbon atoms, $R_{10}$ is substituted or unsubstituted alkyl having 1 to 10 carbon atoms, and $R_{11}$ is selected from the group consisting of a single bond, -O-, -C(=O)O-, -OC(=O)-, -NH-, -S- and -C(=O)-.

According to a third exemplary embodiment of the present application, the overcoat layer may be an adhesive layer. In this case, the overcoat layer may comprise a multifunctional acrylate and a monofunctional acrylate as the photoreactive compound, and may further comprise a crosslinking agent. The multifunctional acrylate may have three or more (meth)acryl groups. The monofunctional acrylate may have one (meth)acryl group.

The multifunctional acrylate may be a compound of Formula 3 below:

[Formula 3]

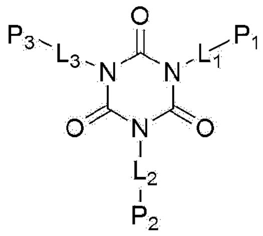

In Formula 3a, $L_1$, $L_2$ and $L_3$ may be each independently a hydrocarbon group having 1 to 16 carbon atoms, 1 to 12 carbon atoms, 1 to 8 carbon atoms, 1 to 4 carbon atoms or 4 to 8 carbon atoms. $L_1$, $L_2$ and $L_3$ may be, for example, a saturated hydrocarbon group or an unsaturated hydrocarbon group. $L_1$, $L_2$ and $L_3$ may be, for example, a linear, branched or cyclic hydrocarbon group.

In Formula 3, $P_1$, $P_2$ and $P_3$ may be each independently a radical of Formula 3a below:

[Formula 3a]

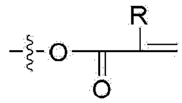

In Formula 3, R is hydrogen or an alkyl group. The alkyl group may be an alkyl group having 1 to 4 carbon atoms, 1 to 3 carbon atoms, 1 to 2 carbon atoms or 1 carbon atom.

The monofunctional acrylate may be a compound of Formula 4 below:

[Formula 4]

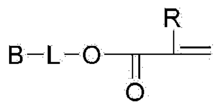

In Formula 4, B is a ring having a hetero atom, L is a hydrocarbon group, and R is hydrogen or an alkyl group. B may be, for example, a ring structure having 5 or more atoms, which may contain oxygen (O) as the hetero atom. B may be, for example, a 5 atom-hetero ring of 4 carbon atoms and 1 oxygen atom. L may specifically be a saturated or unsaturated hydrocarbon group having 1 to 16 carbon atoms, 1 to 12 carbon atoms, 1 to 8 carbon atoms or 1 to 4 carbon atoms. The hydrocarbon group may be a linear, branched or cyclic hydrocarbon group. When R is an alkyl group, the alkyl group may be an alkyl group having 1 to 4 carbon atoms, 1 to 3 carbon atoms, 1 to 2 carbon atoms or 1 carbon atom.

The monofunctional acrylate may be included in a range of 50 to 150 parts by weight or 80 to 120 parts by weight relative to 100 parts by weight of the multifunctional acrylate.

The crosslinking agent may include a multifunctional isocyanate. In this specification, the multifunctional isocyanate may mean a compound having at least two isocyanate groups. The multifunctional isocyanate may have 10 or less, 8 or less, 6 or less, or 4 or less isocyanate groups. Such a crosslinking agent may be exemplified by, for example, isophorone diamine diisocyanate or the like, but is not limited thereto. The crosslinking agent may be included in a range of 10 to 90 parts by weight or 30 to 70 parts by weight relative to 100 parts by weight of the multifunctional acrylate.

The overcoat layer, as described in the third exemplary embodiment may further comprise an oligomer component. The oligomer component may include, for example, a polyester-based oligomer, an acrylic oligomer, a urethane-based oligomer, and the like. The oligomer may be included in a range of 50 to 150 parts by weight or 80 to 120 parts by weight relative to 100 parts by weight of the multifunctional acrylate.

The thickness of the overcoat layer may be appropriately controlled in consideration of the purpose of the

present application. The overcoat layer may have a thickness, for example, in a range of 0.1 μm to 10 μm. If the thickness of the overcoat layer is too thin, the coating property may be deteriorated, the aging effect may be reduced, and the interlayer attachment force may not be secured, whereas if the thickness of the overcoat layer is too thick, the coating property may be deteriorated, the degree of curing may be poor, and the haze may be caused, whereby it may be advantageous to adjust the thickness within the range.

The overcoat layer may have an in-plane retardation value of 0 nm to 3 nm for light having a wavelength of 550 nm. When the in-plane retardation value of the overcoat layer is large, it affects the polarization state to lower the antireflection performance and it is difficult to correct the value, whereby it may be advantageous that the retardation value of the overcoat layer is within the above range.

The overcoat layer may not exhibit adhesive force. In one example, the overcoat layer may have a peel force of less than 1 N/25mm, less than 0.1 N/25mm or less than 0.05 N/25mm for alkali-free glass. Thus, the overcoat layer of the present application can be regarded as a layer having a function for improving the high temperature reliability of the optically anisotropic layer, rather than a function for attaching the optically anisotropic film to other elements.

The optically anisotropic film may further comprise an alignment film. The alignment film may be in direct contact with the opposite side of the optically anisotropic layer on which the overcoat layer is formed.

The alignment film can be selected and used without particular limitation as long as it has orientation ability with respect to the adjacent liquid crystal layer. For example, it may be a contact type alignment film such as a rubbing alignment film, or it is possible to use an alignment film known that the photo-alignment film compound is included to be capable of exhibiting orientation characteristics by a noncontact manner such as, for example, irradiation of linearly polarized light.

The optically anisotropic film may further comprise a base layer. The base layer may be disposed on the opposite side of the optically anisotropic layer on which the overcoat layer is formed. When the optically anisotropic film comprises both the alignment film and the base layer, the base layer may be disposed on one side of the alignment film. Figure 3 is an illustrated of the structure of such an optically anisotropic film according to an exemplary embodiment. As illustrated in Figure 3, the optically anisotropic film may sequentially comprise a base layer (40), an alignment film (30) on the base layer, an optically anisotropic layer (10) on the alignment film, and an overcoat layer (20) on the optical anisotropic layer.

As the base layer, a known material may be used without particular limitation. For example, an inorganic film such as glass, a crystalline or non-crystalline silicon film, quartz or an ITO (indium tin oxide) film or a plastic film, and the like can be used. As the base layer, an optically isotropic base layer or an optically anisotropic base layer such as a retardation layer can also be used.

As the plastic base layer, a base layer comprising TAC (triacetyl cellulose); a COP (cycloolefin copolymer) such as a norbornene derivative; PMMA (poly(methyl methacrylate); PC (polycarbonate); PE (polyethylene); PP (polypropylene); PVA (polyvinyl alcohol); DAC (diacetyl cellulose); Pac (polyacrylate); PES (poly ether sulfone); PEEK (polyetheretherketon); PPS (polyphenylsulfone), PEI (polyetherimide); PEN (polyethylenemaphthatlate); PET (polyethyleneterephtalate); PI (polyimide); PSF (polysulfone); PAR (polyarylate), or an amorphous fluororesin and the like can be used, but is not limited thereto. A coating layer of gold, silver, or a silicon compound such as silicon dioxide or silicon monoxide, or a coating layer such as an antireflection layer may also be present in the base layer, if necessary.

In the production method, the optically anisotropic layer may be produced, for example, by applying a liquid crystal composition comprising a polymerizable liquid crystal compound which satisfies the reverse wavelength dispersion characteristic of Equation 1 on a base layer and then curing it.

The liquid crystal composition may further comprise a solvent. The solvent may include aromatic hydrocarbons such as toluene, benzene and xylene; aliphatic hydrocarbons such as cyclohexane and decalin; esters such as ethyl acetate and butyl acetate; ketones such as acetone, methyl ethyl ketone and methyl isobutyl ketone; alcohols such as methanol, ethanol, isopropanol, butanol, isobutanol, methyl cellosolve, ethyl cellosolve and butyl cellosolve; ethers such as tetrahydrofuran and dioxane; halogenated hydrocarbons such as dichloromethane, chloroform and carbon tetrachloride; dimethylformamide; dimethyl sulfoxide and the like. These solvents may be used alone or in combination of two or more.

The liquid crystal compound may be included in an amount of 20 to 45 parts by weight relative to 100 parts by weight of the liquid crystal composition. In this range, it may be advantageous for the liquid crystal composition to exhibit a suitable reverse wavelength dispersion property.

The method of applying a liquid crystal composition on a base layer is not particularly limited, which may be performed by coating through, for example, well-known coating methods such as a roll coating, a printing method, inkjet coating, a slit nozzle method, bar coating, comma coating, spin coating or gravure coating.

An alignment film may be formed on the base layer on which the liquid crystal composition is applied. That is, the liquid crystal composition may be applied on the alignment film formed on the base layer. In the step of forming an overcoat layer on an optically anisotropic layer, the optically anisotropic layer may be present in a structure that a base layer, an alignment film on the base layer and an optically anisotropic layer on the alignment film are laminated. According

to a method for producing a polarizing plate to be described below, the base layer may also be comprised in the polarizing plate in an integral type, or may not be comprised therein in a transfer type.

The curing method of the liquid crystal composition is not particularly limited, which can be performed by a known liquid crystal compound polymerization method. For example, it can be performed by a method of maintaining an appropriate temperature such that the polymerization reaction can be initiated or a method of being irradiated with suitable active energy rays. When the maintenance at an appropriate temperature and the irradiation of active energy rays are simultaneously required, the above processes can be performed sequentially or simultaneously. Here, the irradiation of active energy rays can be performed using, for example, a high-pressure mercury lamp, an electrodeless lamp or a xenon lamp, and the like, and the conditions of the irradiated active energy rays such as a wavelength, a light intensity or a light quantity can be selected within a range that the polymerization of the polymerizable liquid crystal compound can be properly performed.

In the production method, the step of forming an overcoat layer may be performed by applying an overcoat composition comprising a photoreactive compound and a solvent to one side of the optically anisotropic layer. After applying the overcoat composition, the production method may further comprise a process of drying it as necessary.

In one example, the drying step may be necessary when the material of the overcoat layer is as described in the first and second exemplary embodiments, and the drying step may not be necessary when the overcoat layer is as described in the third exemplary embodiment. When the overcoat layer is as described in the third exemplary embodiment, a step of attaching a protective film onto the overcoat composition may be performed instead of the drying step. As the protective film, for example, a TAC film or the like may be exemplified.

When the material of the overcoat layer is as described in the first and second exemplary embodiments, the overcoat composition may comprise 1 to 10 parts by weight of the overcoat material, relative to 100 parts by weight of the solvent. When the material of the overcoat layer is as described in the third exemplary embodiment, the overcoat composition may comprise 200 to 400 parts by weight or 200 to 300 parts by weight of the overcoat material, relative to 100 parts by weight of the solvent. As the solvent, any one of the solvents exemplified as the solvent of the liquid crystal composition may be appropriately selected and used.

The method of applying an overcoat composition is also not particularly limited, and it may be applied by appropriately selecting any one of the application methods of the liquid crystal composition.

The drying of the overcoat composition may be performed, for example, at a temperature of 50°C to 100°C for 1 minute to 10 minutes. If the drying temperature is too low, the degree of curing and the attachment force is insufficient, whereas if it is too high, scratch and transmittance decrease may occur, whereby it may be advantageous that the drying temperature is controlled within the above range. On the other hand, if the drying time is too short, the degree of curing and the attachment force is insufficient, whereas if it is too long, dewetting defects may occur, whereby it may be advantageous that the drying time is controlled within the above range.

After applying the overcoat composition (after performing the drying or the step of attaching the protective film, if necessary), the production method may further comprise a step of curing the overcoat composition. The method of curing the overcoat composition is not particularly limited, which may be performed by, for example, a method of irradiating it with light so that a light reaction may occur. The light irradiation may be performed using, for example, a high-pressure mercury lamp, an electrodeless lamp or a xenon lamp, and the like, and the conditions such as the wavelength, light intensity or light quantity of the irradiated light can be selected within a range that the polymerization of the photoreactive compound can be suitably performed.

In one example, the light for curing the overcoat composition may be ultraviolet rays. At this time, the intensity of the irradiated light may be, for example, in a range of 100 mJ to 500 mJ. In one example, when the material of the overcoat layer is as described in the first and second exemplary embodiments, the light intensity may be, for example, in the range of 200 mJ to 400 mJ, and in the case of the third exemplary embodiment, the light intensity may be in the range of 100 mJ to 200 mJ.

After forming an overcoat layer, the production method further comprises a step of aging it. The aging is performed at high temperature, thereby being more advantageous to improve the high temperature reliability of the optically anisotropic film.

The aging is performed at a temperature of 100°C or higher. Specifically, the aging may be performed at a temperature of 100°C or higher or 110°C or higher. The upper limit of the aging temperature may be, for example, 200°C or lower, 180°C, 160°C, 140°C or lower, or 130°C or lower. If the aging temperature is too low, it is difficult to obtain the effect of improving high temperature reliability, whereas if it is too high, the orientation quality of the liquid crystal may deteriorate and the dimensional change of the roll stock may occur, whereby it may be advantageous that the aging temperature is controlled within the above range.

The aging may be performed for 1 minute or more. Specifically, the aging may be performed for a time of 30 minutes or less, 25 minutes or less, 20 minutes or less, 15 minutes or less, 10 minutes or less, or 5 minutes or less. If the aging time is too short, it is difficult to obtain the effect of improving high temperature reliability, whereas if it is too long, the orientation quality of the liquid crystal may deteriorate and the dimensional change of the roll stock may occur,

whereby it may be advantageous that the aging time is controlled within the above range.

The overcoat composition may further comprise an initiator. The initiator may be, for example, a radical initiator. As the initiator, for example, general initiators, which can generate radicals by irradiation of light such as ultraviolet rays to initiate photopolymerization, such as a benzoin-based initiator, oxime ester series, a hydroxyketonebased initiator, an amino-ketone-based initiator or a phosphine oxide-based initiator can be used without limitation. The photoinitiator may be comprised, for example, in a range of 0.01 parts by weight to 10 parts by weight relative to 100 parts by weight of the components of the overcoat composition excluding the solvent, without being limited thereto.

The overcoat composition may further comprise any additives, for example, a silane coupling agent such as r-methacryloxypropyl trimethoxy silane, an adhesion promoter such as poly(vinylphenol), a surfactant, a leveling agent, and the like in an appropriate ratio, in addition to the above-described components.

The present application also relates to an optically anisotropic film produced according to the above method. The optically anisotropic film produced according to the method may have excellent high temperature reliability. For example, the optically anisotropic film can inhibit the degradation of the retardation value even after leaving at high temperature for a long time. In the optically anisotropic film, an absolute value (ΔR) of a retardation change rate calculated by Equation 3 below may be 5.0% or less, 4.0% or less, 3.0% or less, 2.5% or less, 2.0% or less, 1.5% or less, or 1.0% or less:

[Equation 3]

$$\Delta R = (R_1 - R_2)/R_1 \times 100\%.$$

In Equation 3, ΔR is the in-plane retardation change rate of the optically anisotropic film after standing at high temperature, $R_1$ is the initial in-plane retardation value of the optically anisotropic film, and $R_2$ is the in-plane retardation value after leaving the optically anisotropic film at 85°C for 500 hours. The initial in-plane retardation value means an in-plane retardation value at normal temperature before high temperature standing. In this specification, the normal temperature may mean a temperature without artificially controlling the temperature. The normal temperature may mean, for example, a temperature within a range of 20°C to 40°C or a range of 20°C to 30°C.

The present application also relates to a use of the optically anisotropic film. The optically anisotropic film may be used to provide a polarizing plate. Figure 4 is a schematic illustration of a structure of a polarizing plate to which the optically anisotropic film according to an exemplary embodiment. As illustrated in Figure 4, the polarizing plate may comprise a polarizer (200) and the optically anisotropic film (100) disposed on one side of the polarizer. In one example, the optically anisotropic layer may be disposed closer to the polarizer as compared to the overcoat layer. In another example, the overcoat layer may be disposed closer to the polarizer as compared to the optically anisotropic layer. In a method for producing a polarizing plate to be described below, this arrangement order may vary depending on whether the optically anisotropic film is attached to the polarizer according to an integral manner or the optically anisotropic film is attached to the polarizer according to a transfer manner. Hereinafter, unless otherwise specified while describing optically anisotropic films, the contents described in the optically anisotropic film may be equally applied thereto.

In this specification, the term polarizer means a film, sheet or element having a polarization function. The polarizer is a functional element capable of extracting light that vibrates in one direction from incident light that vibrates in various directions. In this specification, the polarizer may mean a film, a sheet or an element itself having the polarizing film, and the polarizing plate may mean an element further comprising other layers in addition to the polarizer. As the other layer, an optically anisotropic film, a protective base layer, a pressure-sensitive adhesive layer, an adhesive layer, and the like may be exemplified.

As the polarizer, an absorptive polarizer may be used. In this specification, the absorptive polarizer means an element exhibiting selective transmission and absorption characteristics with respect to incident light. For example, the polarizer may transmit light that vibrates in one direction from incident light that vibrates in various directions, and may absorb light that vibrates in the other directions.

The polarizer may be a linear polarizer. In this specification, the linear polarizer means a case where the selectively transmitting light is linearly polarized light that vibrates in any one direction and the selectively absorbing light is linearly polarized light that vibrates in directions orthogonal to the vibration direction of the linear polarized light.

As the polarizer, for example, a polarizer in which iodine is dyed to a polymer stretched film such as a PVA stretched film, or a guest-host polarizer in which liquid crystals polymerized in an oriented state are used as a host and anisotropic dyes arranged along the orientation of the liquid crystals are used as a guest may be used, without being limited thereto.

According to one example of the present application, a PVA stretched film can be used as the polarizer. The transmittance and the polarization degree of the polarizer can be appropriately adjusted in consideration of the object

of the present application. For example, the transmittance of the polarizer may be 42.5% to 55%, and the polarization degree may be 65% to 99.9997%.

In one example, when the polarizing plate is used as a circularly polarizing plate or an elliptically polarizing plate, the optically anisotropic layer or the optically anisotropic film may have a quarter wavelength delay characteristic. In this specification, the term n-wave phase delay characteristic means a characteristic that the incident light can be phase-delayed by n times the wavelength of the incident light within at least a part of the wavelength range. The quarter-wave phase delay characteristic may be a characteristic that the incident linearly polarized light is converted into elliptically polarized light or circularly polarized light and conversely, the incident elliptically polarized light or circularly polarized light is converted into linearly polarized light. In one example, the optically anisotropic layer or the optically anisotropic film may have an in-plane retardation for light having a wavelength of 550 nm in a range of 90 nm to 300 nm. In another example, the in-plane retardation may be 100 nm or more, 105 nm or more, 110 nm or more, 115 nm or more, 120 nm or more, 125 nm or more, or 130 nm or more. In addition, the in-plane retardation may be 290 nm or less, 280 nm or less, 270 nm or less, 260 nm or less, 250 nm or less, 240 nm or less, 230 nm or less, 220 nm or less, 210 nm or less, 200 nm or less, 190 nm or less, 180 nm or less, 170 nm or less, 160 nm or less, 150 nm or less, or 145 nm or less.

When the polarizing plate is used as a circularly polarizing plate or an elliptically polarizing plate, the optically anisotropic layer may form an angle within a range of about 30 degrees to 60 degrees between its slow axis and the light absorption axis of the polarizer. In another example, the angle may be 35 degrees or more, or 40 degrees or more, and may also be 55 degrees or less, or 50 degrees or less.

In another example, in order to use the polarizing plate as an optical compensation polarizing plate other than a circularly polarizing plate or an elliptically polarizing plate, the in-plane retardation value of the optically anisotropic layer may have a phase delay characteristic other than a quarter-wave phase delay characteristic, and the angle between the slow axis of the optically anisotropic layer and the light absorption axis of the polarizer may also be appropriately adjusted in consideration of the purpose for which it is applied.

The polarizing plate may further comprise a protective base layer. The protective base layer may be disposed on the side opposite to the side of the polarizer facing the optically anisotropic layer. The protective base layer may be attached to one side of the polarizer via an adhesive layer. In this specification, the term "protective base layer" may mean a base layer which is disposed on one side of a polarizer as above to perform a function of protecting the polarizer, and the "base layer" may mean a base layer to serve as a support that an optically anisotropic composition is applied at the time of producing the optically anisotropic film.

As the protective base layer, a film of a known material may be used. As such a material, for example, a thermoplastic resin having excellent transparency, mechanical strength, thermal stability, moisture barrier properties or isotropy, and the like may be used. An example of such a resin may be exemplified by a cellulose resin such as TAC (triacetyl cellulose), a polyester resin, a polyether sulfone resin, a polysulfone resin, a polycarbonate resin, a polyamide resin, a polyimide resin, a polyolefin resin, a (meth)acrylic resin, a cyclic polyolefin resin such as a norbornene resin, a polyarylate resin, a polystyrene resin, a polyvinyl alcohol resin or a mixture of the foregoing, and the like. The protective base layer may further comprise a surface treatment layer on one side of the film. The surface treatment layer may be exemplified by an antireflection layer, a hard coating layer, and the like, but is not limited thereto.

The polarizing plate may further comprise a pressure-sensitive adhesive layer or an adhesive layer. In one example, the polarizer and the optically anisotropic film may be attached via the pressure-sensitive adhesive layer or the adhesive layer. In one example, the polarizing plate may further comprise a pressure-sensitive adhesive layer on the optically anisotropic film side opposite to the polarizer. The pressure-sensitive adhesive layer may perform a function of attaching the polarizing plate to a display element to be described below. As the pressure-sensitive adhesive or adhesive, a known pressure-sensitive adhesive or adhesive such as acrylic series, epoxy series, silicone series, rubber series and urethane series may be used without particular limitation.

The polarizing plate of the present application may have various other structures within the scope without impairing the objects of the present invention as long as the polarizer and the optically anisotropic film are basically included.

The present application also relates to a method for producing the polarizing plate. The production method of the polarizing plate may comprise the production method of the optically anisotropic film. The production method of the polarizing plate may comprise steps of producing the optically anisotropic film and attaching the optically anisotropic film to one side of the polarizer. Hereinafter, for the production of the optically anisotropic film, and the polarizer, the above-described contents may be equally applied unless otherwise specified.

The step of attaching the optically anisotropic film to the polarizer may be performed by, for example, an integral manner or a transfer manner.

The integral manner is a manner that the entire optically anisotropic film is attached to the polarizer. At this time, the entire optically anisotropic film may mean a structure that all of the base layer, the alignment film, the optically anisotropic layer and the overcoat layer are laminated. According to the integral manner, the base layer of the optically anisotropic film may be attached via a pressure-sensitive adhesive layer or an adhesive layer so as to be disposed close

to the polarizer. Figure 5 is a schematic illustration of a structure of a polarizing plate produced according to the integral manner (no pressure-sensitive adhesive layer or adhesive layer is shown). As illustrated in Figure 5, the polarizing plate may sequentially comprise a polarizer (200), a base layer (40), an alignment film (30), an optically anisotropic layer (10) and an overcoat layer (20).

The transfer manner may be performed by transferring the alignment film, the optically anisotropic layer and the overcoat layer from the base layer of the entire optionally anisotropic film to the polarizer. In this specification, transfer may mean a process of bonding other layers (alignment film, optically anisotropic layer and overcoat layer) formed on a base layer (carrier) to a body to be transferred, for example, a polarizer, by means of a pressure-sensitive adhesive or an adhesive, and the like, and then peeling and removing the base layer (carrier). According to the transfer manner, the overcoat layer of the optically anisotropic film may be attached via the pressure-sensitive adhesive layer or the adhesive layer so as to be disposed close to the polarizer. Figure 6 is a schematic illustration of a structure of a polarizing plate produced according to the transfer manner (no pressure-sensitive adhesive layer or adhesive layer is shown). As illustrated in Figure 6, the polarizing plate may sequentially comprise a polarizer (200), an overcoat layer (20), an optically anisotropic layer (10) and an alignment film (30).

The optically anisotropic film and/or polarizer may be applied to a display device. The display device is a device having a display element, which comprises a light emitting element or a light emitting device as a light emitting source. The display device may comprise a liquid crystal display device, an organic electroluminescence (EL) display device, an inorganic electroluminescence (EL) display device, a touch panel display device, an electron emission display device (an electric field emission display device (FED or the like), a surface electric field emission display device (SED)), an electronic paper (a display device using electronic ink or an electrophoresis element), a plasma display device, a projection display device (a grating light valve (GLV) display device, a display device with a digital micromirror device (DMD) or the like) and a piezoelectric ceramic display, and the like. The liquid crystal display device includes any of a transmissive liquid crystal display device, a transflective liquid crystal display device, a reflective liquid crystal display device, a directview type liquid crystal display device and a projection type liquid crystal display device, and the like. These display devices may be display devices for displaying two-dimensional images and stereoscopic display devices for displaying three-dimensional images.

In particular, the circularly polarizing plate can be effectively used in organic EL display devices and inorganic EL display devices, and the optical compensation polarizing plate can be effectively used in liquid crystal display devices and touch panel display devices.

The arrangement of the polarizing plate in the display device is not particularly limited, and for example, a known arrangement may be adopted. For example, in the reflective liquid crystal display device, the circularly polarizing plate may be used as any one of the circularly polarizing plates of the liquid crystal panel for preventing reflection of external light and securing visibility.

When the polarizing plate is applied to an organic light emitting device, the organic light emitting device may comprise a reflective electrode, a transparent electrode, an organic light emitting element including an organic layer interposed between the reflective electrode and the transparent electrode and having a light emitting layer, and the circularly polarizing plate disposed on one side of the organic light emitting element. The circularly polarizing plate may be present outside the reflective or transparent electrode and the optically anisotropic layer may be disposed closer to the reflective or transparent electrode than the linear polarizer.

## Advantageous Effects

The optically anisotropic film produced according to the present application has a reverse wavelength dispersion property, which can control retardation deterioration at high temperature. Such an optically anisotropic film can be used in polarizing plates and display devices.

## Brief Description of Drawings

Figure 1 is a schematic illustration of an optically anisotropic film according to an exemplary embodiment of the present application.

Figure 2 is a representation of the x-axis, the y-axis and the z-axis.

Figure 3 is a schematic illustration of an optically anisotropic film according to an exemplary embodiment of the present application.

Figure 4 is a schematic illustration of a polarizing plate according to an exemplary embodiment of the present application.

Figure 5 is a schematic illustration of a polarizing plate according to another exemplary embodiment of the present

application.

Figure 6 is a schematic illustration of a polarizing plate according to another exemplary embodiment of the present application.

Figure 7 is a graphical representation of high temperature reliability evaluation results.

**Mode for Invention**

Hereinafter, the present application will be described in detail through examples according to the present application and comparative examples not complying with the present application, but the scope of the present application is not limited to the following examples.

**Example 1.**

20 g of 5-norbornene-2-methyl-(4-methoxy cinnamate) as a photo-alignment polymer, 20 g of dipentaerythritol hexaacrylate as a reactive compound and 5 g of a photoinitiator (Irgacure OXE02, Ciba-Geigy (Switzerland)) were dissolved in 980g of toluene to prepare a composition for forming an alignment film, and the composition for forming the alignment film was applied on a PET (polyethylene terephthalate) film so as to have a thickness of about 1,000 Å or so after drying, and then hot-air dried in a drying oven at 80°C for 2 minutes. After drying, it was irradiated with ultraviolet rays linearly polarized in the direction perpendicular to the travel direction of the film via a wire grid polarizing plate (manufactured by Moxtek) at a light quantity of 150 $mJ/cm^2$, using a high-pressure mercury lamp as a light source, to impart orientation, thereby producing the alignment film.

A liquid crystal composition was prepared by dissolving an UCL-R17 mixture (manufactured by DIC) comprising a polymerizable liquid crystal compound capable of planar orientation and having a reverse wavelength dispersion property in toluene as a solvent so as to have 35 parts by weight of the solid content relative to 100 parts by weight of the total composition (solvent + UCL-R17 mixture). The liquid crystal composition was applied on the alignment film so as to have a thickness of 2$\mu$m after drying, and hot-air dried in a drying oven at 80°C for 2 minutes. Then, it was irradiated with unpolarized ultraviolet rays by a high-pressure mercury lamp (80 w/cm) and cured, thereby forming an optically anisotropic layer. The ultraviolet rays are ultraviolet rays having a wavelength of about 150 nm to 350 nm, which are irradiated with a light quantity of 50 $mJ/cm^2$ to 5000 $mJ/cm^2$ as the total irradiance level. The produced optical film is a laminated optical film comprising the PET film, the alignment film formed on the film, and the optically anisotropic layer formed on the alignment film.

<u>Overcoat Layer Formation</u>

An overcoat composition was prepared by mixing 0.5 g of PETA (pentaerythritol triacrylate) and 0.05 g of an initiator (Irgacure 907, manufactured by Ciba-Geigy, Switzerland) in 10 g of a toluene solvent. The overcoat composition was coated on the optically anisotropic layer in a thickness of 0.2$\mu$m to 0.5$\mu$m, followed by drying at 60°C for 2 minutes, and then irradiated with ultraviolet rays at an intensity of 300 mJ and cured to form an overcoat layer. The overcoat layer was formed, and then further subjected to aging at 120°C for 3 minutes to produce an optically anisotropic film.

**Example 2.**

An optically anisotropic film was produced in the same method as in Example 1, except that the overcoat layer was formed on the optically anisotropic layer in the following method.

<u>Formation of Overcoat Layer</u>

An overcoat composition was prepared by mixing 0.2 g of a material of Formula A below, 0.02 g of PETA (pentaerythritol triacrylate) and 0.002 g of an initiator (oximer ester) in 10 g of a toluene solvent. The overcoat composition was coated on the optically anisotropic layer in a thickness of 0.2$\mu$m to 0.3$\mu$m, followed by drying at 80°C for 2 minutes, and then irradiated with ultraviolet rays at an intensity of 300 mJ and cured to form an overcoat layer. The overcoat layer was formed, and then further subjected to aging at 120°C for 3 minutes.

[Formula A]

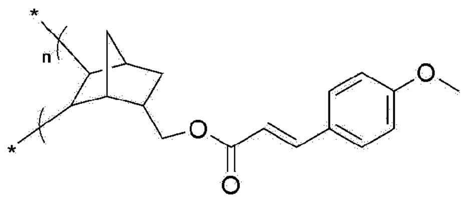

(weight average molecular weight: about 10,000 to 100,000)

**Example 3.**

An optically anisotropic film was produced in the same method as in Example 1, except that the overcoat layer was formed in the following method.

Formation of Overcoat Layer

An overcoat composition was prepared by mixing 2 g of tris(acryloxyethyl) isocyanurate, 1 g of isophorone diamine diisocyanate, 2 g of tetrahydro furfuryl acrylate, 2 g of a polyester oligomer and 0.35 g of an initiator (Darocur TPO) in 3 g of a MEK solvent. The overcoat composition was coated on the optically anisotropic layer in a thickness of 1μm to 5μm, and then a TAC film was bonded together onto the coating layer of the overcoat composition. Next, the side of the TAC film was irradiated with ultraviolet rays at an intensity of 150 mJ and the overcoat composition was cured to form an overcoat layer. The overcoat layer was formed and then further subjected to aging at 120°C for 3 minutes.

**Comparative Example 1.**

In Example 1, an optically anisotropic film was produced in the same method as in Example 1, except that no overcoat layer was formed.

**Comparative Example 2.**

In Example 1, an optically anisotropic film was produced in the same method as in Example 1, except that no overcoat layer was formed and the optically anisotropic layer was subjected to aging at 120°C for 3 minutes.

**Comparative Example 3.**

In Example 1, an optically anisotropic film was produced in the same method as in Example 1, except that the overcoat layer was formed and then no aging was performed.

**Comparative Example 4.**

In Example 2, an optically anisotropic film was produced in the same method as in Example 2, except that the overcoat layer was formed and then no aging was performed.

**Comparative Example 5.**

In Example 3, an optically anisotropic film was produced in the same method as in Example 3, except that the overcoat layer was formed and then no aging was performed.

**Evaluation Example 1. High Temperature Reliability Evaluation**

For the optically anisotropic films produced in Examples and Comparative Examples, the following samples were each produced to measure the initial in-plane retardation values and the in-plane retardation values after high temperature standing, and the results were graphically represented in Figure 7 (x-axis: hour; y-axis: 100 - ΔR (%)) and Table 1.

For Examples 1 and 2 and Comparative Examples 3 and 4, samples were prepared, in which the TAC films

were attached to the overcoat layers via a pressure-sensitive adhesive, the PET film were peeled off, and then glass was attached to the alignment films via a pressure-sensitive adhesive.

For Example 3 and Comparative Example 5, samples were prepared, in which the PET films were peeled off, and then glass was attached to the alignment films via a pressure-sensitive adhesive.

For Comparative Examples 1 and 2, samples were prepared, in which the TAC films were attached to the optically anisotropic layers via a pressure sensitive adhesive, the PET films were peeled off, and then glass was attached to the alignment films via a pressure-sensitive adhesive.

The initial in-plane retardation value means the in-plane retardation value of the optically anisotropic film measured at a temperature of 25°C, and the in-plane retardation value after high temperature standing means the in-plane retardation value measured while applying heat to the optically anisotropic film at a temperature of 85°C for 500 hours. In Table 1, ΔR means a retardation change rate (%), and is defined by Equation 3 below.

[Equation 3]

$$\Delta R = (R_1 - R_x)/R_1 \times 100\%$$

In Equation 3, ΔR is the in-plane retardation change rate of the optically anisotropic film after high temperature standing, $R_1$ is the initial in-plane retardation value of the optically anisotropic film, and $R_x$ is the in-plane retardation value of the optically anisotropic film after x hour standing at 85°C.

The in-plane retardation was measured for light having a wavelength of 550 nm using Axoscan equipment (manufactured by Axomatrics) capable of measuring 16 Muller matrices. Using Axoscan equipment, 16 Muller matrices were obtained according to the manufacturer's manual, through which the retardation was extracted.

[Table 1]

| | | Initial (25°C) Rin Value | 100 - ΔR (%) | | | | | | |
|---|---|---|---|---|---|---|---|---|---|
| | | | Initial (25°C) | 24h (85°C) | 100h (85°C) | 200h (85°C) | 300h (85°C) | 400h (85°C) | 500h (85°C) |
| Comparative Example | 1 | 139.2 | 100 | 97.8 | 97.0 | 96.5 | 96.4 | 96.0 | 95.8 |
| | 2 | 137.0 | 100 | 99.1 | 98.4 | 97.8 | 97.7 | 97.4 | 97.3 |
| | 3 | 139.9 | 100 | 99.1 | 98.8 | 98.6 | 98.4 | 98.6 | 98.4 |
| | 4 | 138.7 | 100 | 98.7 | 98.1 | 97.9 | 97.6 | 97.7 | 97.5 |
| | 5 | 139.1 | 100 | 98.6 | 98.2 | 98.1 | 97.8 | 97.9 | 97.8 |
| Example | 1 | 137.8 | 100 | 99.8 | 99.6 | 99.3 | 99.3 | 99.2 | 99.1 |
| | 2 | 137.1 | 100 | 99.7 | 99.2 | 98.7 | 98.6 | 98.7 | 98.5 |
| | 3 | 137.3 | 100 | 99.7 | 99.3 | 98.8 | 98.7 | 98.7 | 98.7 |

[Explanation of Reference Numerals]

10: optically anisotropic layer, 20: overcoat layer, 30: alignment film, 40: base layer, 100: optically anisotropic film, 200: polarizer

## Claims

**1.** A method for producing an optically anisotropic film (100) comprising:

a step of forming an overcoat layer (20) comprising a photoreactive compound having three or more photoreactive groups on one side of an optically anisotropic layer (10) comprising a polymerizable liquid crystal compound satisfying Equation 1 below; and
a step of aging the overcoat layer at a temperature of 100°C or higher after the step of forming the overcoat layer:

[Equation 1]

$$R(450)/R(550) < R(650)/R(550),$$

wherein, R (λ) is an in-plane retardation of a liquid crystal layer for light having a wavelength of λ nm, wherein the liquid crystal layer comprises the polymerizable liquid crystal compound oriented in a planar state.

2. The method for producing an optically anisotropic film according to claim 1, wherein the optically anisotropic layer has an in-plane retardation value for light having a wavelength of 550 nm in a range of 100 nm to 180 nm.

3. The method for producing an optically anisotropic film according to claim 1, wherein the photoreactive compound is a compound having cinnamate groups or (meth)acryl groups as the photoreactive groups.

4. The method for producing an optically anisotropic film according to claim 1, wherein the photoreactive compound is a polymer having three or more cinnamate groups.

5. The method for producing an optically anisotropic film according to claim 1, wherein the photoreactive compound is a monomer having three or more (meth)acryl groups.

6. The method for producing an optically anisotropic film according to claim 1, wherein the overcoat layer has a thickness in a range of 0.1 μm to 10 μm.

7. The method for producing an optically anisotropic film according to claim 1, wherein the overcoat layer has an in-plane retardation value for light having a wavelength of 550 nm in a range of 0 nm to 3 nm.

8. The method for producing an optically anisotropic film according to claim 1, wherein the overcoat layer exhibits no adhesive force.

9. The method for producing an optically anisotropic film according to claim 1, further comprising: a step of applying a liquid crystal composition on a base layer (40) and then curing it to form the optically anisotropic layer, wherein the liquid crystal composition comprises the polymerizable liquid crystal compound.

10. The method for producing an optically anisotropic film according to claim 9, wherein an alignment film (30) is formed on the base layer on which the liquid crystal composition is applied.

11. The method for producing an optically anisotropic film according to claim 1, wherein the step of forming an overcoat layer is performed by applying an overcoat composition comprising the photoreactive compound and a solvent on one side of the optically anisotropic layer.

12. The method for producing an optically anisotropic film according to claim 1, wherein the aging is performed at a temperature range of 100°C or higher to 200°C or lower.

13. The method for producing an optically anisotropic film according to claim 1, wherein the aging is performed for 1 minute to 30 minutes.

14. The method for producing an optically anisotropic film according to claim 1, wherein an absolute value of a retardation change rate (ΔR) of the optically anisotropic film produced by the method is calculated by Equation 3 below:

[Equation 3]

$$\Delta R = (R_1 - R_2)/R_1 \times 100$$

wherein, ΔR is an in-plane retardation change rate of the optically anisotropic film after standing at high temperature, $R_1$ is an initial in-plane retardation value of the optically anisotropic film, and $R_2$ is an in-plane retardation value after leaving the optically anisotropic film at 85°C for 500 hours, and
wherein the ΔR value is 5% or less.

**Patentansprüche**

1. Verfahren zur Herstellung eines optisch anisotropen Films (100), umfassend:

   einen Schritt des Bildens einer Überzugsschicht (20), umfassend eine photoreaktive Verbindung mit drei oder mehr photoreaktiven Gruppen auf einer Seite einer optisch anisotropen Schicht (10), umfassend eine polymerisierbare Flüssigkristallverbindung, die die nachstehende Gleichung 1 erfüllt; und
   einen Schritt des Alterns der Überzugsschicht bei einer Temperatur von 100 °C oder höher nach dem Schritt des Bildens der Überzugsschicht:

   [Gleichung 1]

   $$R(450)/R(550) < R(650)/R(550),$$

   wobei R (λ) eine Verzögerung in der Ebene einer Flüssigkristallschicht für Licht mit einer Wellenlänge von λ nm ist, wobei die Flüssigkristallschicht die polymerisierbare Flüssigkristallverbindung in einem planaren Zustand orientiert umfasst.

2. Verfahren zur Herstellung eines optisch anisotropen Films nach Anspruch 1, wobei die optisch anisotrope Schicht einen Verzögerungswert in der Ebene für Licht mit einer Wellenlänge von 550 nm in einem Bereich von 100 nm bis 180 nm aufweist.

3. Verfahren zur Herstellung eines optisch anisotropen Films nach Anspruch 1, wobei die photoreaktive Verbindung eine Verbindung mit Cinnamatgruppen oder (Meth)acrylgruppen als die photoreaktiven Gruppen ist.

4. Verfahren zur Herstellung eines optisch anisotropen Films nach Anspruch 1, wobei die photoreaktive Verbindung ein Polymer mit drei oder mehr Cinnamatgruppen ist.

5. Verfahren zur Herstellung eines optisch anisotropen Films nach Anspruch 1, wobei die photoreaktive Verbindung ein Monomer mit drei oder mehr (Meth)acrylgruppen ist.

6. Verfahren zur Herstellung eines optisch anisotropen Films nach Anspruch 1, wobei die Überzugsschicht eine Dicke in einem Bereich von 0,1 μm bis 10 μm aufweist.

7. Verfahren zur Herstellung eines optisch anisotropen Films nach Anspruch 1, wobei die Überzugsschicht einen Verzögerungswert in der Ebene für Licht mit einer Wellenlänge von 550 nm in einem Bereich von 0 nm bis 3 nm aufweist.

8. Verfahren zur Herstellung eines optisch anisotropen Films nach Anspruch 1, wobei die Überzugsschicht keine Haftkraft aufweist.

9. Verfahren zur Herstellung eines optisch anisotropen Films nach Anspruch 1, ferner umfassend: einen Schritt des Aufbringens einer Flüssigkristallzusammensetzung auf eine Basisschicht (40) und anschließendes Härten derselben, um die optisch anisotrope Schicht zu bilden, wobei die Flüssigkristallzusammensetzung die polymerisierbare Flüssigkristallverbindung umfasst.

10. Verfahren zur Herstellung eines optisch anisotropen Films nach Anspruch 9, wobei ein Ausrichtungsfilm (30) auf der Basisschicht gebildet wird, auf die die Flüssigkristallzusammensetzung aufgebracht wird.

11. Verfahren zur Herstellung eines optisch anisotropen Films nach Anspruch 1, wobei der Schritt des Bildens einer Überzugsschicht durch Aufbringen einer Überzugszusammensetzung, umfassend die photoreaktive Verbindung und ein Lösungsmittel, auf eine Seite der optisch anisotropen Schicht durchgeführt wird.

12. Verfahren zur Herstellung eines optisch anisotropen Films nach Anspruch 1, wobei das Altern bei einem Temperaturbereich von 100 °C oder höher bis 200 °C oder niedriger durchgeführt wird.

13. Verfahren zur Herstellung eines optisch anisotropen Films nach Anspruch 1, wobei das Altern für 1 Minute bis 30

Minuten durchgeführt wird.

**14.** Verfahren zur Herstellung eines optisch anisotropen Films nach Anspruch 1, wobei ein Absolutwert einer Verzögerungsänderungsrate (ΔR) des durch das Verfahren hergestellten optisch anisotropen Films durch die nachstehende Gleichung 3 berechnet wird:

[Gleichung 3]

$$\Delta R = (R_1 - R_2)/R_1 \times 100$$

wobei ΔR eine Verzögerungsänderungsrate in der Ebene des optisch anisotropen Films nach Stehen bei hoher Temperatur ist, $R_1$ ein anfänglicher Verzögerungswert in der Ebene des optisch anisotropen Films ist und $R_2$ ein Verzögerungswert in der Ebene nach Belassen des optisch anisotropen Films bei 85 °C für 500 Stunden ist, und
wobei der ΔR-Wert 5 % oder weniger beträgt.

## Revendications

**1.** Procédé de fabrication d'un film optiquement anisotrope (100) comprenant :

une étape de formation d'une couche de revêtement (20) comprenant un composé photoréactif ayant trois groupes photoréactifs ou plus sur un côté d'une couche optiquement anisotrope (10) comprenant un composé de cristaux liquides polymérisables satisfaisant à l'Équation 1 ci-dessous ; et
une étape de vieillissement de la couche de revêtement à une température égale ou supérieure à 100°C après l'étape de formation de la couche de revêtement :

[Équation 1]

$$R(450)/R(550) < R(650)/R(550),$$

dans lequel, R (λ) est un retard dans le plan d'une couche de cristaux liquides pour une lumière ayant une longueur d'onde de λ nm, dans lequel la couche de cristaux liquides comprend le composé de cristaux liquides polymérisables orientés dans un état planaire.

**2.** Procédé de fabrication d'un film optiquement anisotrope selon la revendication 1, dans lequel la couche optiquement anisotrope a une valeur de retard dans le plan pour une lumière ayant une longueur d'onde de 550 nm dans une plage de 100 nm à 180 nm.

**3.** Procédé de fabrication d'un film optiquement anisotrope selon la revendication 1, dans lequel le composé photoréactif est un composé ayant des groupes cinnamates ou des groupes (méth)acryliques en tant que groupes photoréactifs.

**4.** Procédé de fabrication d'un film optiquement anisotrope selon la revendication 1, dans lequel le composé photoréactif est un polymère ayant trois groupes cinnamates ou plus.

**5.** Procédé de fabrication d'un film optiquement anisotrope selon la revendication 1, dans lequel le composé photoréactif est un monomère ayant trois groupes (méth)acryliques ou plus.

**6.** Procédé de fabrication d'un film optiquement anisotrope selon la revendication 1, dans lequel la couche de revêtement a une épaisseur dans une plage de 0,1 μm à 10 μm.

**7.** Procédé de fabrication d'un film optiquement anisotrope selon la revendication 1, dans lequel la couche de revêtement a une valeur de retard dans le plan pour une lumière ayant une longueur d'onde de 550 nm dans une plage de 0 nm à 3 nm.

**8.** Procédé de fabrication d'un film optiquement anisotrope selon la revendication 1, dans lequel la couche de revêtement ne présente pas de force adhésive.

**9.** Procédé de fabrication d'un film optiquement anisotrope selon la revendication 1, comprenant en outre : une étape d'application d'une composition de cristaux liquides sur une couche de base (40), puis de durcissement pour former la couche optiquement anisotrope, dans lequel la composition de cristaux liquides comprend le composé de cristaux liquides polymérisables.

**10.** Procédé de fabrication d'un film optiquement anisotrope selon la revendication 9, dans lequel un film d'alignement (30) est formé sur la couche de base sur laquelle la composition de cristaux liquides est appliquée.

**11.** Procédé de fabrication d'un film optiquement anisotrope selon la revendication 1, dans lequel l'étape de formation d'une couche de revêtement est effectuée en appliquant une composition de revêtement comprenant le composé photoréactif et un solvant sur un côté de la couche optiquement anisotrope.

**12.** Procédé de fabrication d'un film optiquement anisotrope selon la revendication 1, dans lequel le vieillissement est effectué dans une plage de température égale ou supérieure à 100°C à égale ou inférieure à 200°C.

**13.** Procédé de fabrication d'un film optiquement anisotrope selon la revendication 1, dans lequel le vieillissement est effectué pendant 1 minute à 30 minutes.

**14.** Procédé de fabrication d'un film optiquement anisotrope selon la revendication 1, dans lequel une valeur absolue d'un taux de changement de retard (ΔR) du film optiquement anisotrope produit par le procédé est calculée par l'Équation 3 ci-dessous :

[Équation 3]

$$\Delta R = (R_1 - R_2)/R_1 \times 100$$

dans lequel, ΔR est un taux de changement de retard dans le plan du film optiquement anisotrope après être resté à une température élevée, $R_1$ est une valeur de retard dans le plan initiale du film optiquement anisotrope et $R_2$ est une valeur de retard dans le plan après avoir laissé le film optiquement anisotrope à 85°C pendant 500 heures, et

dans lequel la valeur ΔR est égale ou inférieure à 5 %.

[Figure 1]

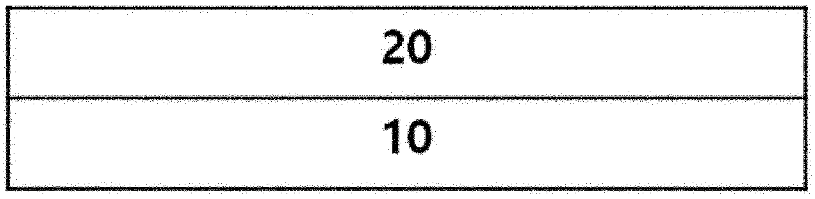


[Figure 2]

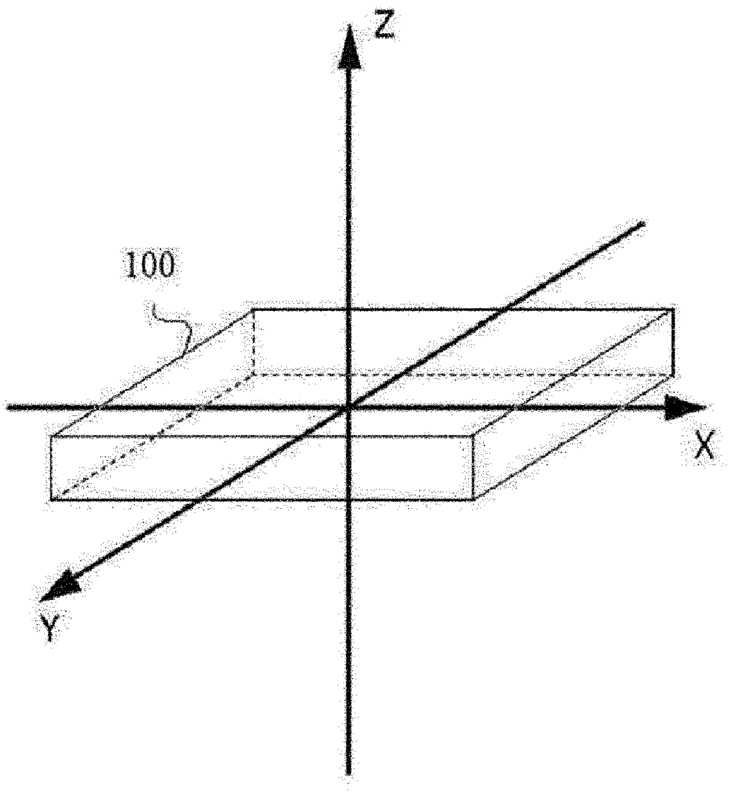


[Figure 3]

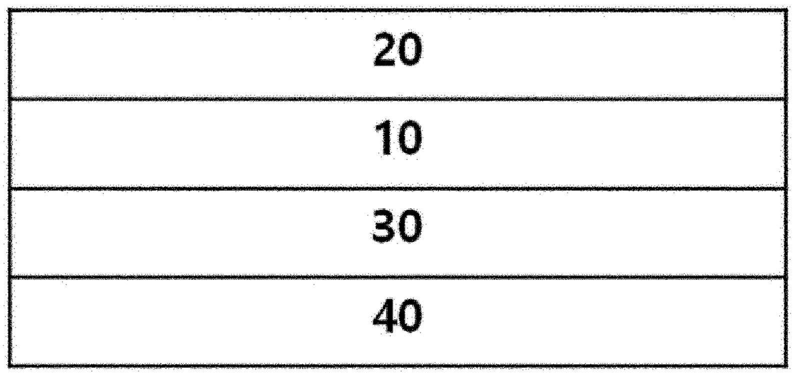


[Figure 4]

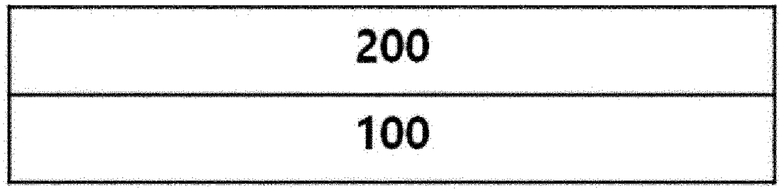


[Figure 5]

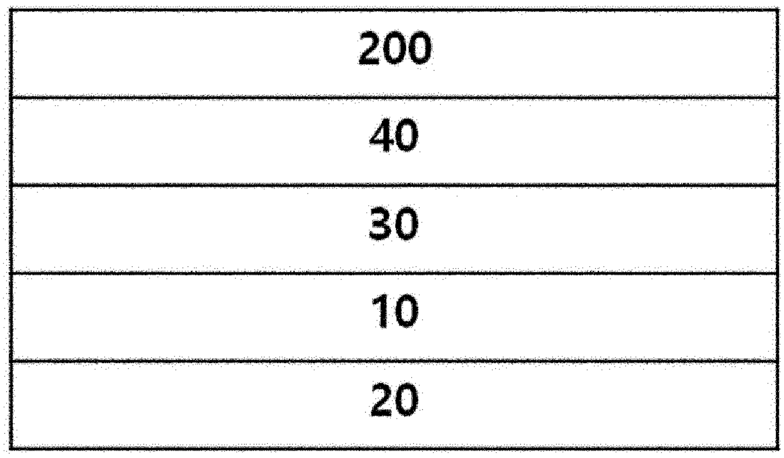


[Figure 6]

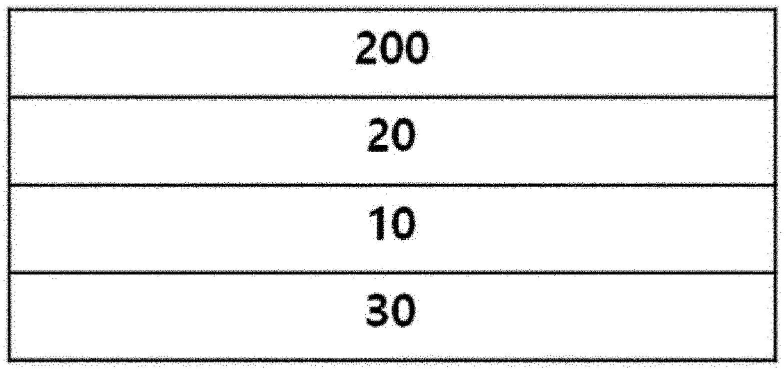

[Figure 7]

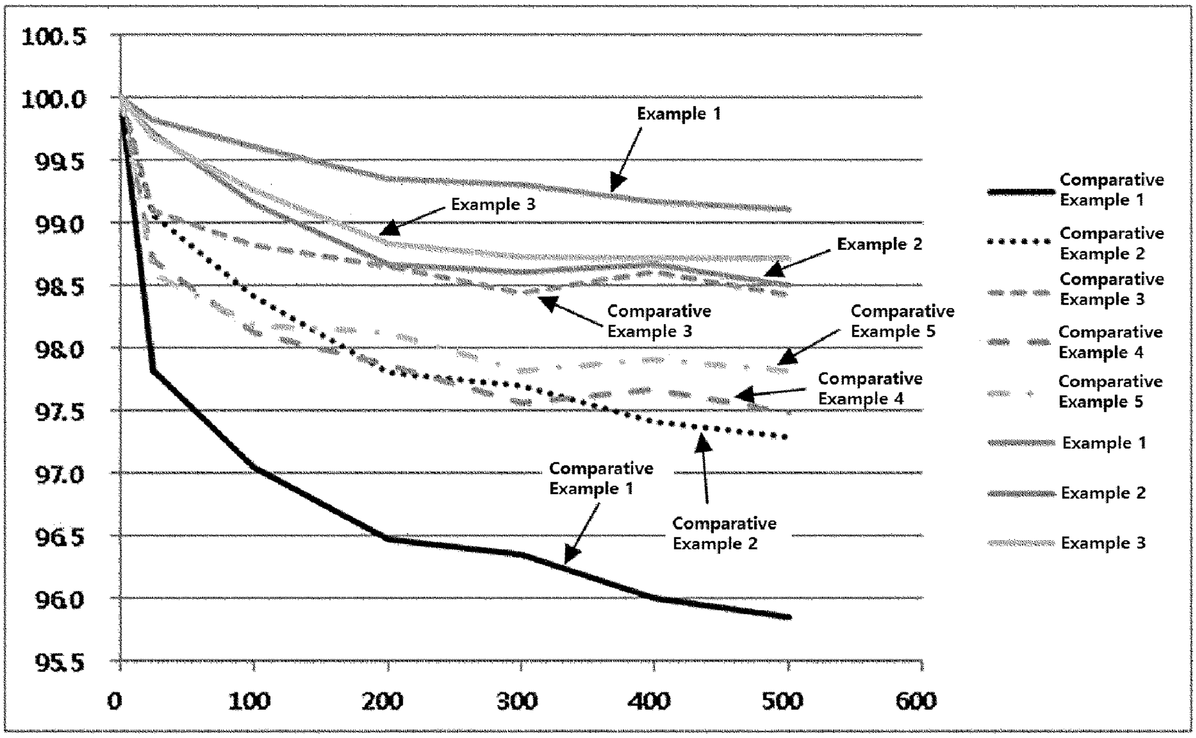
100.5
100.0
99.5
99.0
98.5
98.0
97.5
97.0
96.5
96.0
95.5
0
100
200
300
400
500
600
Example 1
Example 3
Example 2
Comparative Example 3
Comparative Example 5
Comparative Example 4
Comparative Example 1
Comparative Example 2
Comparative Example 1
Comparative Example 2
Comparative Example 3
Comparative Example 4
Comparative Example 5
Example 1
Example 2
Example 3

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description

- KR 1020190002639
- JP 8321381 A
- US 2018348417 A1
- JP 2015083728 W
- JP 2015085342 W
- JP 2016050322 W
- JP 2016050660 W
- JP 2016050661 W
- JP 2016050984 W
- JP 2016050663 W